# EUROPÄISCHE PATENTSCHRIFT

(11) **EP 1 052 295 B1**
(45) Veröffentlichungstag und Bekanntmachung des Hinweises auf die Patenterteilung: **21.07.2004**
(21) Anmeldenummer: 99123002.0
(22) Anmeldetag: 19.11.1999
(51) Int. Cl.: C21D 9/00, B60J 5/04, C21D 1/10

(54) **Verfahren zur Herstellung von Strukturteilen im Automobilbau**
Method for manufacturing of construction parts in automobile construction
Méthode de fabrication d'éléments structurels dans la construction automobile

(30) Priorität: 12.05.1999 DE 19922003
(43) Veröffentlichungstag der Anmeldung: 15.11.2000
(73) Patentinhaber: BENTELER AG, D-33104 Paderborn (DE)
(72) Erfinder: Streubel, Wolfgang, 32756 Detmold (DE); Klasfauseweh, Udo Dr., 33334 Gütersloh (DE); Harbarth, Thomas, 33102 Paderborn (DE); Tjoelker, Todd W.J., Grand Rapids, Michigan 39507 (US)
(74) Vertreter: Bockermann, Rolf, Dipl.-Ing.

(56) Entgegenhaltungen:
- DE-A- 19 640 568
- DE-A- 19 743 802
- US-A- 5 192 376
- US-A- 5 487 795
- ALTENA H ET AL: "ZUNDERFREIES, INDUKTIVES HAERTEN UND DESSEN EINSATZ IN DER KFZ-INDUSTRIE" HAERTEREI TECHNISCHE MITTEILUNGEN, CARL HANSER VERLAG. MUNCHEN, DE, Bd. 54, Nr. 4, Juli 1999 (1999-07), Seiten 216-218-219-222, XP000846463 ISSN: 0341-101X
- PATENT ABSTRACTS OF JAPAN vol. 1995, no. 05, 30. Juni 1995 (1995-06-30) & JP 07 054048 A (NISSHIN STEEL CO LTD), 28. Februar 1995 (1995-02-28)
- PATENT ABSTRACTS OF JAPAN vol. 016, no. 244 (C-0947), 4. Juni 1992 (1992-06-04) & JP 04 052254 A (NISSHIN STEEL CO LTD), 20. Februar 1992 (1992-02-20)

## Beschreibung

Die Erfindung betrifft ein Verfahren zur Herstellung von mindestens bereichsweise eine hohe Festigkeit und eine Mindestdehnbarkeit von 5% bis 10% aufweisenden sowie Sicherheitsfunktionen wahrnehmenden länglichen Strukturteilen im Automobilbau, gemäß den Merkmalen im Oberbegriff des Anspruchs 1.

Sicherheitsfunktionen wahrnehmende längliche Strukturteile im Automobilbau sind in Form von Seitenaufprallträgern, Stoßfängern und Säulenverstärkungen bekannt. Dabei erfordern erhöhte Anforderungen zunehmend den Einsatz von hoch- und höchstfesten Stählen. Die Strukturteile werden in aller Regel in Form von Pressteilen aus Blechplatinen oder durch Umformen und Prägen von Rohren hergestellt. Sie können aber auch durch Rollprofilieren aus Bandstahl hergestellt sein. Neben einer sehr hohen Festigkeit müssen derartige Strukturteile eine Mindestdehnbarkeit von 5 % bis 10 % aufweisen.

In diesem Zusammenhang ist es bekannt kaltumformbare hochfeste Stähle einzusetzen. Derartige Stähle eignen sich jedoch aufgrund ihrer eingeschränkten Umformeigenschaften nur für einfach profilierte Strukturteile.

Darüber hinaus zählt es zum Stand der Technik, härtbare Stähle zu verwenden. Diese Stähle werden zunächst in Form von Platinen oder Rohren im noch weichen Zustand zu Strukturteilen umgeformt. Erst in einem nachträglichen Härtevorgang erhalten die Strukturteile die erforderlichen Festigkeiten. Da die Stähle im weichen Zustand gute Umformeigenschaften aufweisen, können aus ihnen auch komplex profilierte Strukturteile hergestellt werden. Ein Werkstoff mit diesen Eigenschaften ist z.B. 22 Mn 5 mod. Dieser weist im weichen Zustand eine Festigkeit von ca. 600 N/mm² und eine Dehnbarkeit von > 30 % auf. Nach dem Härten werden Festigkeiten von bis zu 1600 N/mm² bei 10 % Dehnung erzielt.

Die zum Härten erforderliche Erwärmung auf Austenitisierungstemperatur wird bislang häufig in gasbeheizten oder mit einer elektrischen Beheizung versehenen Durchlauföfen durchgeführt. Um eine kontinuierliche Produktion zu gewährleisten, sind derartige Durchlauföfen in die Fertigungslinie der Strukturteile integriert. Nachteilig hierbei ist der große Raumbedarf dieser Durchlauföfen. Außerdem ist auf den erheblichen Energieverbrauch und die nicht zu vermeidenden Wärmeverluste hinzuweisen. Auch kann bei Einsatz von Durchlauföfen ein partielles Härten der Strukturteile nicht durchgeführt werden.

Schließlich ist es noch bekannt, härtbare Stähle in kombinierten Form- und Härtungswerkzeugen zu Strukturteilen umzuformen. In diesem Fall werden Platinen oder Rohre vor der Formgebung auf Austenitisierungstemperatur gebracht und dann in einem gekühlten Formwerkzeug gleichzeitig umgeformt und gehärtet. Auch diese Vorgehensweise ist zwangsläufig mit einem hohen werkzeug- und energietechnischen Aufwand verbunden. Sie erhöht außerdem in erheblichem Maße die Taktzeiten bei der Umformung.

Die DE 196 40 567 A1 offenbart ein Verfahren zur Herstellung von mindestens bereichsweise eine hohe Festigkeit und eine Mindestdehnbarkeit von 5 % bis 10 % aufweisenden sowie Sicherheitsfunktionen wahrnehmenden länglichen Strukturteilen im Automobilbau. Die Strukturteile sind Seitenaufprallträger.

Bei dem bekannten Verfahren wird jedes Strukturteil durch im weichen Zustand erfolgendes Umformen von Platinen aus härtbaren Stählen zunächst konfiguriert. Die Strukturteile sind hierbei miteinander verbunden.

Anschließend werden die Strukturteile durch einen sie umgreifenden Induktor erwärmt und danach mit einer dem Induktor folgenden Abschreckbrause abgekühlt.

Nach der Vergütung werden die einzelnen Strukturteile mit einem Schneidwerkzeug voneinander getrennt.

Das bekannte Verfahren ermöglicht es, Strukturteile mit gleich bleibenden Querschnitten im kontinuierlichen Durchlauf fertigen und vergüten zu können.

Durch Härterei Technische Mitteilungen, Carl Hanser Verlag, München (07-1999), 54 (4), 216-218-219-222 erfährt der Fachmann keine Anregung, komplizierte Strukturteile im Automobilbau mindestens partiell härten zu können. Das auf den Seiten 220 und 221 anhand der Figur 14 geschilderte Verfahren betrifft die "Randschichthärtung langer Wellen" und vermittelt keine Anregungen, wie man komplexe Strukturteile im Automobilbau härten kann.

Der Erfindung liegt - ausgehend vom Stand der Technik - die Aufgabe zugrunde, ein Verfahren zur Herstellung von wenigstens bereichsweise eine hohe Festigkeit und eine Mindestdehnbarkeit von 5 % bis 10 % aufweisenden sowie Sicherheitsfunktionen wahrnehmenden länglichen Strukturteilen im Automobilbau zu schaffen, welches mit einem geringen Fertigungs- und Werkzeugaufwand auskommt und bei vermindertem Energieeinsatz einen hohen Wirkungsgrad gewährleistet.

Die Lösung dieser Aufgabe wird nach der Erfindung in den kennzeichnenden Merkmalen des Anspruchs 1 erblickt.

Bei diesem Verfahren gelangen härtbare Stähle, wie beispielsweise 22 Mn B5 mod., zum Einsatz, die zunächst in Form von Platinen oder Rohren im weichen Zustand zu den gewünschten Strukturteilen konfiguriert werden. Die Strukturteile können aber auch durch Rollprofilieren aus Bandstahl hergestellt sein. Die Strukturteile können als offene oder geschlossene Profile gestaltet sein. Die Profilquerschnitte können voneinander abweichen und auch von unterschiedlicher Komplexität sein. Des Weiteren können sich die Profilquerschnitte über die Länge der Strukturteile ändern. Darüberhinaus bilden Krümmungen der Strukturteile keine Probleme. Die Wanddicken der Strukturteile können extrem gering gehalten werden. In der Regel liegen sie zwischen 1 mm und 3 mm.

Nach der Konfiguration der Strukturteile werden diese bei im wesentlichen senkrechter Positionierung gehärtet. Das Erwärmen beim Härten erfolgt mit Hilfe eines entlang des Verlaufs der Strukturteile von unten nach oben relativ verlagerbaren und an den Querschnitt der Strukturteile angepassten sowie die Strukturteile umfassenden Induktors. Hierbei kann es sich um eine Induktionsspule mit einer Windung oder mehreren Windungen handeln. Auch ein Flächeninduktor ist denkbar. Ein Vorteil eines Flächeninduktors liegt z.B. darin, dass er bei komplexen Strukturteilen mit variierenden Querschnitten einen besseren Wirkungsgrad aufweist und eine gleichmäßigere Erwärmung der diversen Querschnitte gewährleistet.

Bei entsprechend angepasstem Induktor können auch gleichzeitig mindestens zwei nebeneinander angeordnete Bauteile erwärmt werden. Hierbei umfasst der Induktor alle Bauteile.

Zum Erreichen einer gleichmäßigen Festigkeit über den gesamten Profilquerschnitt wird auch eine gleichmäßige Erwärmung sichergestellt. Dazu kann der Induktor jedem Strukturteil entsprechend angepasst werden. Darüberhinaus ist es problemlos möglich, eine dem Strukturteil angepasste Frequenz des Induktorstroms zu wählen. Auch können bei sich über die Länge der Strukturteile ändernden Querschnitten die Vorschubgeschwindigkeit des Induktors und/oder die Leistung angepasst werden, um entlang der Strukturteillänge sowie über den gesamten Querschnitt stets gleiche Erwärmungstemperaturen zu gewährleisten.

Die Abkühlung der erwärmten Strukturteile erfolgt mit Hilfe einer Kühleinheit, die dem Induktor in dessen Bewegungsrichtung nachgeführt wird und zum Induktor im Abstand verstellbar ist. Durch die Einstellbarkeit des Abstands zwischen dem Induktor und der Kühleinheit können die Abkühlgeschwindigkeit und damit die Härte bzw. Festigkeit der Strukturteile beeinflusst werden. Da Induktor und Kühleinheit von unten nach oben relativ zu den lagefixierten Strukturteilen bewegt werden, ist gewährleistet, dass das jeweilige Abkühlmedium erst nach dem Aufheizen mit den Strukturteilen in Berührung gelangt, so dass das Aufheizen und das Abkühlen eindeutig zeitlich voneinander getrennt werden können. Außerdem wird hierdurch ein Kontakt eines flüssigen Abkühlmediums mit dem Induktor vermieden und dadurch die Gefahr von Spannungsüberschlägen ausgeschlossen.

Der Induktor und die Kühleinheit werden derart entlang der Strukturteilkontur geführt, dass sich beide Aggregate immer weitgehend senkrecht zur Mittelachse des Strukturteilquerschnitts befinden. Dazu werden sie mit einem Werkzeugschlitten verbunden, der an einer Säule vertikal, zur Säule in Querrichtung und gegenüber der Säule um eine horizontale Achse verlagerbar ist. Hierdurch kann eine möglichst gleichmäßige Erwärmung und Abkühlung auch komplexer räumlich gekrümmter Strukturteile gewährleistet werden.

Da es erfindungsgemäß problemlos möglich ist, den Induktor zusammen mit der Kühleinheit nur über vorbestimmte Bereiche der Strukturteile zu führen und diese Bereiche mit der gewünschten Festigkeit zu versehen, können in den einzelnen Strukturteilbereichen unterschiedliche Festigkeitsanforderungen problemlos erfüllt werden. Im Vergleich zu Durchlauföfen wird eine außerordentliche Kosteneinsparung sowohl im Hinblick auf die einzusetzenden Vorrichtungen als auch die dabei aufzuwendende Energie erreicht. Darüberhinaus stellt sich als weiterer Vorteil eine Minimierung des Bauteilverzugs ein.

Durch die bewusst vorgesehene Möglichkeit des partiellen Härtens kann eine gezielte Einstellung des Crash- bzw. Versagensverhaltens der Strukturteile erreicht werden. Hierbei sind nicht gehärtete Bereiche der Strukturteile dann konstruktiv beabsichtigte Knick- bzw. Faltzonen, die eine definierte Verformung der Strukturteile unterstützen. In diesem Zusammenhang kann mithin eine gezielte lokale Einstellung der Festigkeitswerte an die Bauteilbelastung erfolgen, z.B. in Analogie zu den sogenannten Tailored Blanks aus unterschiedlichen Stahlgüten. Nur entfällt demgegenüber beim induktiven Härten jede Schweißnaht. Darüberhinaus lassen sich breite Festigkeitsübergangszonen realisieren. Ein schroffer Festigkeitssprung wird dadurch vermieden.

Um den Härteprozess an die Anforderungen unterschiedlicher Stahlgüten bezüglich der Abkühlgeschwindigkeiten anzupassen, können zur Abkühlung der Strukturteile unterschiedliche Abkühlmedien eingesetzt werden.

Ferner kann der beim Härten nicht zu vermeidende Härteverzug durch eine geeignete Halterung der Strukturteile reduziert werden. So lässt sich über die Freiheitsgrade der Halterung das Verzugsverhalten gezielt beeinflussen. Auch kann bereits beim Umformen der Strukturteile aus Platinen oder Rohren bzw. durch Rollprofilieren aus Bandstahl durch entsprechende Gestaltung dem späteren Härteverzug gezielt Rechnung getragen werden. Eine Verbesserung der Maßhaltigkeit der Strukturteile ist die Folge. Zum einfachen Wechsel auf andere Bauteilgeometrien können die Halterungen flexibel gestaltet werden.

Wenn nach Anspruch 2 die Kühleinheit umfangsseitig eines Strukturteils in mehrere Kühlelemente aufgegliedert wird, kann eine noch genauere Beeinflussung des Härteverzugs erreicht werden.

In diesem Zusammenhang ist es gemäß Anspruch 3 denkbar, dass die einzelnen Kühlelemente zueinander verstellt werden können, um auf diese Weise einen gezielteren Einfluss auf den Härteverzug nehmen zu können.

Entsprechend den Merkmalen des Anspruchs 4 wird der Induktor mit Hochfrequenz betrieben. Hierbei können Frequenzen von 400 kHz bis 800 kHz besonders vorteilhaft sein. Auf diese Weise können komplexe dünnwandige Strukturteile weitgehend gleichmäßig über den gesamten Querschnitt aufgeheizt werden. Bei diesen hohen Frequenzen ist der in den Strukturteilen induzierte Wirbelstrom weitgehend gleichmäßig über den Querschnitt verteilt.

Über die Kühleinheit können die Strukturteile mit verschiedensten Abkühlmedien beaufschlagt werden. Gemäß Anspruch 5 wird jedes Strukturteil im Bereich der Kühleinheit mit einer Flüssigkeit beaufschlagt. Hierbei kann es sich z.B. um Wasser, Öl oder um ein Öl-Wasser-Gemisch handeln. Durch Bemessung des Volumenstroms und Druck des Abkühlmediums kann die Abkühlgeschwindigkeit bestimmt und damit ein wesentlicher Einfluss auf das sich einstellende Gefüge und somit auf die Härte gemäß dem Zeit-Temperatur-Umwandlungs-Schaubild genommen werden.

Eine andere Möglichkeit der Beaufschlagung der Strukturteile mit einem Abkühlmedium wird in den Merkmalen des Anspruchs 6 erblickt. Danach wird jedes Strukturteil im Bereich der Kühleinheit mit einem Flüssigkeitsnebel beaufschlagt. Dieser Flüssigkeitsnebel wird fein zerstäubt. Hierdurch kann eine sanftere Abkühlung im Vergleich zu einer schroffen Abkühlung mit einer Flüssigkeit erzielt werden. Auch ist es so möglich, keine vollständige Abkühlung des Strukturteils herbeizuführen. Es wird vielmehr eine bestimmte Restwärme im Strukturteil erhalten, die zum Selbstanlassen führt.

Ferner ist es gemäß Anspruch 7 möglich, jedes Strukturteil im Bereich der Kühleinheit mit einem gasförmigen Medium zu beaufschlagen. Hierbei kann es sich um Luft bzw. Druckluft oder um ein inertes Gas handeln. Ein inertes Gas verhindert gleichzeitig eine Zunderbildung am Strukturteil. Auf diese Weise lässt sich eine eventuelle Entzunderung, z.B. durch Sandstrahlen, einsparen. Auch lassen sich eventuelle Entkohlungen des Werkstoffs des Strukturteils vermeiden. Wie schon beim Flüssigkeitsnebel ist es auch bei einem gasförmigen Medium möglich, eine bestimmte Restwärme im Strukturteil aufrechtzuerhalten, die dann zum Selbstanlassen führt.

Schließlich ist es entsprechend den Merkmalen des Anspruchs 8 möglich, zur Abkühlung eines erwärmten Strukturteils in Kombination ein gasförmiges Abkühlmedium oder ein Flüssigkeitsnebel mit einer Flüssigkeit einzusetzen. So erfolgt zunächst eine langsame Abkühlung über einen Gasstrom oder einen Flüssigkeitsnebel und danach ein abschließendes Abschrecken mit einer Flüssigkeit. Die verschiedenen Abkühlmedien werden hierbei in unterschiedlichen Abständen hinter dem Induktor angeordnet. Dadurch ist ein definiertes Durchlaufen von Abkühlkurven im Zeit-Temperatur-Umwandlungs-Schaubild möglich.

Möglich ist es auch, die Strukturteile nach dem Härten mit demselben Induktor auf Anlasstemperatur zu erwärmen.

Die wesentlichen Vorteile des erfindungsgemäßen Verfahrens sind mithin:
- ein höherer Wirkungsgrad bei der Wärmeeinbringung,
- ein geringerer Platzbedarf,
- jedes Strukturteil kann nach den spezifischen Anforderungen beliebig partiell gehärtet werden.

Hierdurch ergibt sich wiederum eine vereinfachte Integration in die gesamte Fertigungsanlage.
- Es werden keine heißen Strukturteile gehandhabt, da über die Kühleinheit noch in der Härteanlage eine Abschreckung erfolgt.
- Die Verzunderung der Strukturteile wird deutlich herabgesetzt.
- Der Anlagenverschleiß und die Wartungskosten werden merklich gesenkt, da bewegliche Teile der Härteanlage nicht erwärmt werden.

Die Erfindung ist nachfolgend anhand von in den Zeichnungen dargestellten Ausführungsbeispielen näher erläutert. Es zeigen:
- Figur 1: in der Perspektive im Schema ein Strukturteil im Automobilbau zusammen mit einem Induktor und einer Kühleinheit;
- Figur 2: einen horizontalen Querschnitt durch die Darstellung der Figur 1 in der Ebene II-II in Richtung der Pfeile IIa gesehen;
- Figur 3: im Schema in der Seitenansicht eine Vorrichtung zum Härten eines Strukturteils ähnlich dem der Figur 1;
- Figur 4: in der Perspektive im Schema ein Strukturteil im Automobilbau gemäß einer weiteren Ausführungsform zusammen mit einem Induktor und einer Kühleinheit;
- Figur 5: einen horizontalen Querschnitt durch die Darstellung der Figur 4 in der Ebene V-V in Richtung der Pfeile Va gesehen;
- Figur 6: in der Perspektive im Schema zwei Strukturteile im Automobilbau zusammen mit einem Induktor und einer Kühleinheit und
- Figur 7: einen horizontalen Querschnitt durch die Darstellung der Figur 6 in der Ebene VII-VII in Richtung der Pfeile VIIa gesehen.

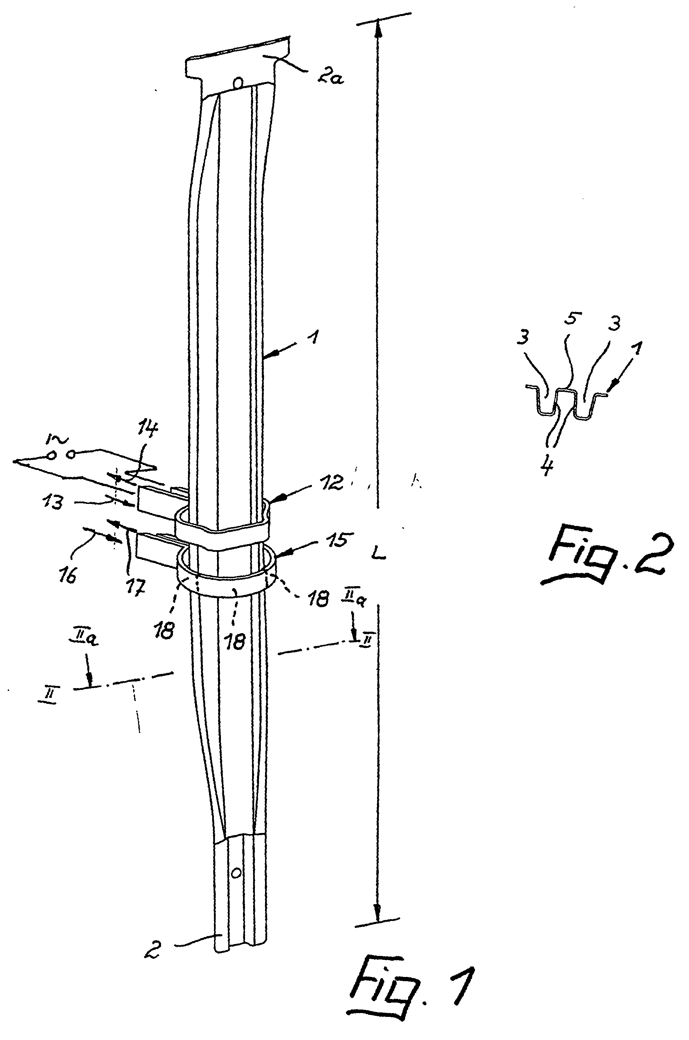

Die Figuren 1 und 2 zeigen ein Strukturteil 1 in Form eines Seitenaufprallträgers. Das Strukturteil 1 weist zwischen den Befestigungsenden 2, 2a zwei im Querschnitt trapezförmige Rinnen 3 auf, deren Flanken 4 durch einen Steg 5 miteinander verbunden sind. Bei einem derartigen Struktureil 1 ist es erwünscht, es mindestens partiell über seine Länge L mit einer bestimmten Festigkeit zu versehen.

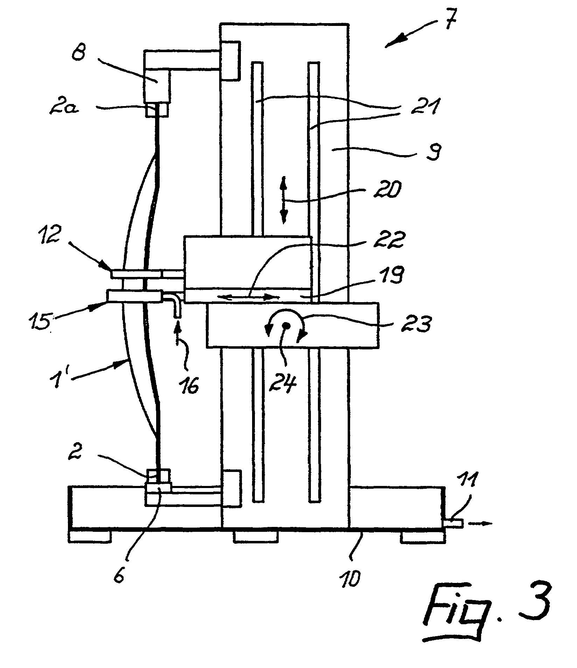

Zu diesem Zweck wird das Strukturteil 1 oder ein Strukturteil 1' gemäß Figur 3 in im wesentlichen vertikaler Position mit seinem unteren Ende 2 an ein Festlager 6 einer Vorrichtung 7 zum Härten angeschlagen. Das obere Ende 2a des Strukturteils 1 wird von einem Loslager 8 der Vorrichtung 7 gehalten.

Sowohl das Festlager 6 als auch das Loslager 8 bilden Bestandteile einer Säule 9, die in einer Auffangwanne 10 für ein flüssiges Abkühlmedium steht. Die Auffangwanne 10 ist mit einem Abfluss 11 zur Abführung des erwärmten Abkühlmediums zwecks Rückkühlung und Filterung versehen.

Das Strukturteil 1, 1' ist gemäß den Darstellungen der Figuren 1 und 3 von einem Induktor 12 umschlossen, der weitgehend dem Querschnitt des Strukturteils 1, 1' angepasst ist. Der Induktor 12 wird, wie in Figur 1 schematisch dargestellt, mit einer Frequenz von 400 bis 600 kHz betrieben. Er wird mit einem Kühlmedium beaufschlagt. Dessen Zu- und Abführungen sind mit 13 und 14 bezeichnet.

Im Abstand unterhalb des Induktors 12 und zu diesem relativ im Abstand verstellbar ist eine Kühleinheit 15 vorgesehen, die ebenfalls das Strukturteil 1, 1' umschließt. Die Kühleinheit 15 ist beim Ausführungsbeispiel mit dem Abkühlmedium Wasser-Öl-Emulsion beaufschlagt. Dessen Zu- und Abführungen sind mit 16 und 17 bezeichnet.

Wie aus Figur 1 ferner erkennbar ist, kann die Kühleinheit 15 in Umfangsrichtung in verschiedene Kühlelemente 18 unterteilt sein. Diese Kühlelemente 18 können relativ zueinander verstellbar sein.

Die Figur 3 zeigt darüberhinaus, dass der Induktor 12 und die Kühleinheit 15 mit einem Werkzeugschlitten 19 verbunden sind, der entsprechend dem Doppelpfeil 20 an Führungsbahnen 21 der Säule 9 vertikal, entsprechend dem Doppelpfeil 22 in Querrichtung und entsprechend dem Doppelpfeil 23 um eine horizontale Achse 24 verlagert werden kann. Auf diese Weise ist es möglich, Induktor 12 und Kühleinheit 15 entsprechend dem Konturenverlauf des Strukturteils 1' gezielt zu führen.

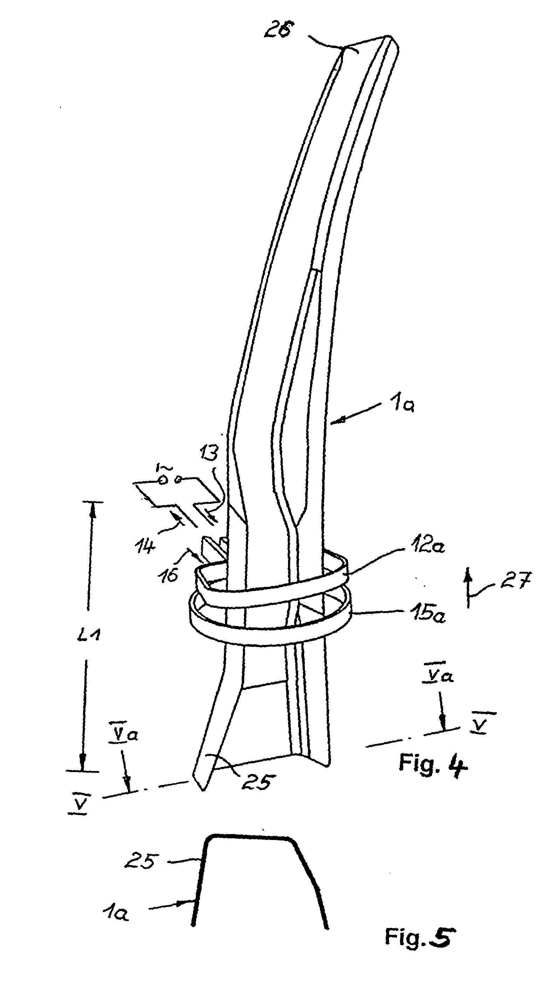

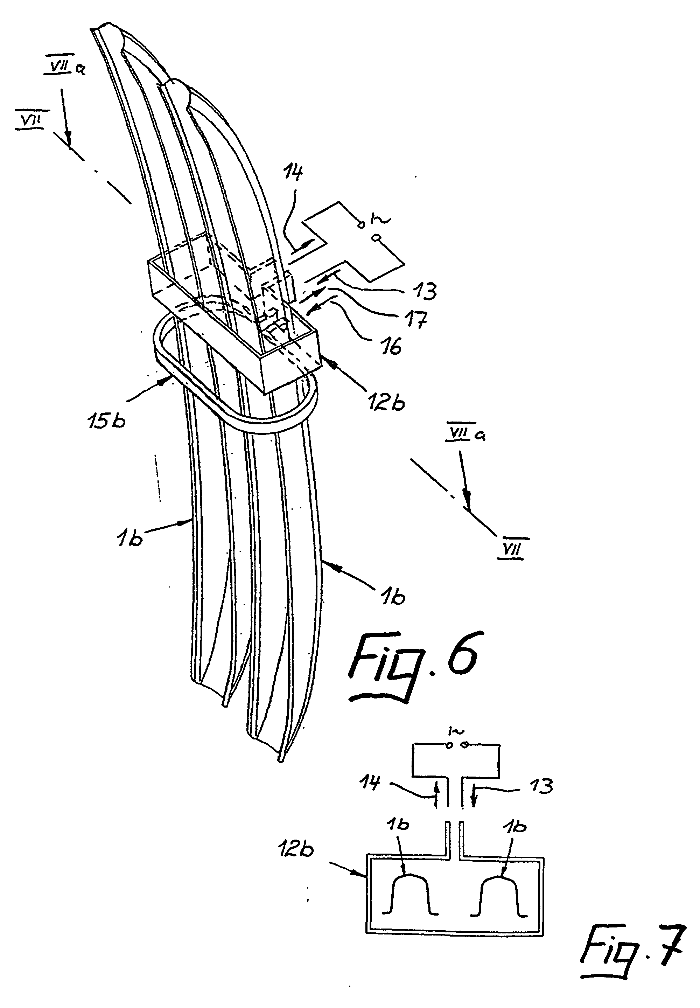

In der Figur 4 ist in der Perspektive ein Strukturteil 1a in Form einer Verstärkung für eine B-Säule eines Personenkraftwagens veranschaulicht. Figur 5 zeigt den Querschnitt des Strukturteits 1a am unteren Ende 25. Dieses Strukturteil 1a wird lediglich im Anbindungsbereich an die Schwelle des Personenkraftwagens hoch belastet, so dass es auch nur hier hinsichtlich der Festigkeit erhöht werden muss.

Zu diesem Zweck wird das Strukturteil 1a in im wesentlichen vertikaler Position am unteren Ende 25 und oberen Ende 26 durch eine nicht näher dargestellte Halterung fixiert. Gehärtet wird der Längenbereich L1 des Strukturteils 1a, und zwar dadurch, dass ein an den Querschnitt des Strukturteils 1a angepasster Induktor 12a mit nachgeordneter Kühleinheit 15a gemäß dem Pfeil 27 von unten nach oben über den Längenbereich L1 geführt wird. Mittels des Induktors 12a kann mithin der Längenbereich L1 auf die zum Härten erforderliche Austenitisierungstemperatur gebracht und mit Hilfe der Kühleinheit 15a abgeschreckt werden.

In den Figuren 6 und 7 ist dargestellt, wie gleichzeitig zwei Strukturteile 1b trapezförmigen Querschnitts mit Hilfe eines als Platteninduktor ausgebildeten Induktors 12b erwärmt und durch eine nachgeführte Kühleinheit 15b abgeschreckt werden.

Ansonsten entspricht der Verfahrensablauf dem anhand der Figuren 1 bis 3 geschilderten Verfahrensablauf, so dass auf eine nochmalige Erläuterung verzichtet werden kann. Auch eine Vorrichtung 7 gemäß Figur 3 kann in angepasster Ausgestaltung benutzt werden.

### Bezugszeichenaufstellung

- 1 -: Strukturteil
1' - Strukturteil
1a - Strukturteil
1b - Strukturteil
- 2 -: Befestigungsende v. 1
2a - Befestigungsende v. 1
- 3 -: Rinnen v. 1
- 4 -: Flanken v. 3
- 5 -: Steg v. 1
- 6 -: Festlager
- 7 -: Vorrichtung
- 8 -: Loslager
- 9 -: Säule
- 10 -: Auffangwanne
- 11 -: Abfluss v. 10
- 12 -: Induktor
12a - Induktor
12b - Induktor
- 13 -: Zuführung zu 12, 12a, 12b
- 14 -: Abführung v. 12, 12a, 12b
- 15 -: Kühleinheit
15a - Kühleinheit
15b - Kühleinheit
- 16 -: Zuführung zu 15, 15a, 15b
- 17 -: Abführung v. 15, 15a, 15b
- 18 -: Kühlelemente
- 19 -: Werkzeugschlitten
- 20 -: Doppelpfeil
- 21 -: Führungsbahnen
- 22 -: Doppelpfeil
- 23 -: Doppelpfeil
- 24 -: Achse
- 25 -: unteres Ende v. 1a
- 26 -: oberes Ende v. 1a
- 27 -: Pfeil

- L -: Länge v. 1
- L1 -: Längenbereich v. 1a

## Patentansprüche

1. Verfahren zur Herstellung von mindestens bereichsweise eine hohe Festigkeit und eine Mindestdehnbarkeit von 5 % bis 10 % aufweisenden sowie Sicherheitsfunktionen wahrnehmenden länglichen Strukturteilen (1, 1', 1a, 1b) im Automobilbau, bei welchem durch im weichen Zustand erfolgendes Umformen von Platinen, Bandstahl oder Rohren aus härtbaren Stählen jedes Strukturteil (1, 1', 1a, 1b) zunächst konfiguriert und dann mittels eines der Strukturteilkontur folgenden, zu dem Strukturteil (1, 1', 1a, 1b) relativ verlagerbaren, bauteilumgreifenden Induktors (12, 12a, 12b) wenigstens partiell auf die zum Härten erforderliche Austenitisierungstemperatur gebracht und anschließend mit einer dem Induktor (12, 12a, 12b) in Bewegungsrichtung nachgeführten Kühleinheit (15, 15a, 15b) abgekühlt wird, **dadurch gekennzeichnet, dass** das Strukturteil (1, 1', 1a, 1b) im wesentlichen senkrecht positioniert und der Induktor (12, 12a, 12b) von unten nach oben entlang des Strukturteils (1, 1', 1a, 1b) verlagert wird, wobei der Induktor (12, 12a, 12b) und die Kühleinheit (15, 15a, 15b) zueinander relativ verstellbar sind sowie mit einem Werkzeugschlitten (19) verbunden werden, der an einer Säule (9) vertikal, zur Säule (9) in Querrichtung und gegenüber der Säule (9) um eine horizontale Achse (24) verlagerbar ist.

2. Verfahren nach Anspruch 1, **dadurch gekennzeichnet, dass** die Kühleinheit (15, 15a, 15b) umfangsseitig des Strukturteils (1, 1', 1a, 1b) in mehrere Kühlelemente (18) aufgegliedert wird.

3. Verfahren nach Anspruch 2, **dadurch gekennzeichnet, dass** die Kühlelemente (18) zueinander verstellbar sind.

4. Verfahren nach einem der Ansprüche 1 bis 3, **dadurch gekennzeichnet, dass** der Induktor (12, 12a, 12b) mit Hochfrequenz betrieben wird.

5. Verfahren nach einem der Ansprüche 1 bis 4, **dadurch gekennzeichnet, dass** jedes Strukturteil (1, 1', 1a, 1b) im Bereich der Kühleinheit (15, 15a, 15b) mit einer Flüssigkeit beaufschlagt wird.

6. Verfahren nach einem der Ansprüche 1 bis 4, **dadurch gekennzeichnet, dass** jedes Strukturteil (1, 1', 1a, 1b) im Bereich der Kühleinheit (15, 15a, 15b) mit einem Flüssigkeitsnebel beaufschlagt wird.

7. Verfahren nach einem der Ansprüche 1 bis 4, **dadurch gekennzeichnet, dass** jedes Strukturteil (1, 1', 1a, 1b) im Bereich der Kühleinheit (15, 15a, 15b) mit einem gasförmigen Abkühlmedium beaufschlagt wird.

8. Verfahren nach einem der Ansprüche 1 bis 7, **dadurch gekennzeichnet, dass** jedes Strukturteil (1, 1', 1a, 1b) im Bereich der Kühleinheit (15, 15a, 15b) zunächst mit einem gasförmigen Abkühlmedium oder mit einem Flüssigkeitsnebel und danach mit einer Flüssigkeit beaufschlagt wird.

## Claims

1. A method of manufacturing elongate structural parts (1, 1', 1a, 1b) in automotive engineering, said structural parts having at least in certain zones a high strength and a minimum extensibility of 5% to 10%, said parts monitoring safety functions, wherein each structural part (1, 1', 1a, 1b), by forming in the soft state plates, strip steel or tubes of hardenable steels, is first configured and then, by means of an inductor (12, 12a, 12b) which engages around the component, follows the structural part contour, and is displaceable relatively to the structural part (1, 1', 1a, 1b), is brought partially to the austenitisation temperature required for hardening, and then cooled with a cooling unit (15, 15a, 15b) trailing the inductor (12, 12a, 12b) in the direction of movement, **characterised in that** the structural part (1, 1', 1a, 1b) is positioned substantially vertically and the inductor (12, 12a, 12b) is displaced upwardly from below along the structural part (1, 1', 1a, 1b), the inductor (12, 12a, 12b) and the cooling unit (15, 15a, 15b) being movable relatively to one another and connected to a tool carriage (19) displaceable on a column (9) vertically in the transverse direction relatively to the column (9) and about a horizontal axis (24) relatively to the column (9).

2. A method according to claim 1, **characterised in that** the cooling unit (15, 15a, 15b) is divided up peripherally of the structural part (1, 1', 1a, 1b) into a plurality of cooling elements (18).

3. A method according to claim 2, **characterised in that** the cooling elements (18) are displaceable relatively to one another.

4. A method according to any one of claims 1 to 3, **characterised in that** the inductor (12, 12a, 12b) is operated at high frequency.

5. A method according to any one of claims 1 to 4, **characterised in that** a liquid is applied to each structural part (1, 1', 1a, 1b) in the region of the cooling unit. (15, 15a, 15b).

6. A method according to any one of claims 1 to 4, **characterised in that** a liquid mist is applied to each structural part (1, 1', 1a, 1b) in the region of the cooling unit (15, 15a, 15b).

7. A method according to any one of claims 1 to 4, **characterised in that** a gaseous cooling medium is applied to each structural part (1, 1', 1a, 1b) in the region of the cooling unit (15, 15a, 15b).

8. A method according to any one of claims 1 to 7, **characterised in that** a gaseous cooling medium or a liquid mist is first applied to each structural part (1, 1', 1a, 1b) in the region of the cooling unit (15, 15a, 15b) and then a liquid is applied thereto.

## Revendications

1. Procédé pour fabriquer des pièces structurelles allongées (1, 1', 1a, 1b) pour la construction automobile qui présentent au moins localement une haute résistance et une élongation minimum de 5 à 10 %, et remplissant des fonctions de sécurité, dans lequel chaque pièce structurelle (1, 1', 1a, 1b) est tout d'abord configurée par déformation exécutée à l'état doux sur des plaques, des bandes ou des tubes en acier durcissable, puis amenée au moins partiellement à la température de conversion austénitique nécessaire pour le durcissement, au moyen d'un inducteur (12, 12a, 12b) qui entoure la pièce structurelle en suivant le contour de celle-ci, est mobile par rapport à ladite pièce structurelle (1, 1', 1a, 1b), et ensuite refroidie au moyen d'une unité de refroidissement (15, 15a, 15b) amenée à suivre l'inducteur (12, 12a, 12b) dans la direction de déplacement, **caractérisé en ce que** la pièce structurelle (1, 1', 1a, 1b) est positionnée sensiblement verticalement et l'inducteur (12, 12a, 12b) est déplacé du bas vers le haut le long de la pièce structurelle (1, 1', 1a, 1b), ledit inducteur (12, 12a,12b) et ladite unité de refroidissement (15, 15a, 15b) étant déplaçables l'un par rapport à l'autre et étant reliés à un chariot à outils (19), lequel est déplaçable verticalement sur une colonne (9), avec faculté de déplacement en direction transversale par rapport à la colonne (9) et de rotation autour d'un axe horizontal (24) par rapport à la colonne (9).

2. Procédé selon la revendication 1, **caractérisé en ce que** l'unité de refroidissement (15, 15a, 15b) est subdivisée en plusieurs éléments de refroidissement (18) en sens périphérique de la pièce structurelle (1, 1', 1a, 1b).

3. Procédé selon la revendication 2, **caractérisé en ce que** les éléments de refroidissement (18) sont déplaçables les uns par rapport aux autres.

4. Procédé selon l'une des revendications 1 à 3, **caractérisé en ce que** l'inducteur (12, 12a, 12b) est excité à haute fréquence.

5. Procédé selon l'une des revendications 1 à 4, **caractérisé en ce que** chaque pièce structurelle (1, 1', 1a, 1b) est exposée à un liquide dans la région de l'unité de refroidissement (15, 15a, 15b).

6. Procédé selon l'une des revendications 1 à 4, **caractérisé en ce que** chaque pièce structurelle (1, 1', 1a, 1b) est exposée à un brouillard de liquide dans la région de l'unité de refroidissement (15, 15a, 15b).

7. Procédé selon l'une des revendications 1 à 4, **caractérisé en ce que** chaque pièce structurelle (1, 1', 1a, 1b) est exposée à un milieu de refroidissement gazeux dans la région de l'unité de refroidissement (15, 15a, 15b).

8. Procédé selon l'une des revendications 1 à 7, **caractérisé en ce que** chaque pièce structurelle (1, 1', 1a, 1b) est exposée tout d'abord à un milieu de refroidissement gazeux ou à un brouillard de liquide, et ensuite à un liquide dans la région de l'unité de refroidissement (15, 15a, 15b).
